# FASCICULE DE BREVET EUROPEEN

(11) **EP 0 461 029 B1**
(45) Date de publication et mention de la délivrance du brevet: **12.04.1995**
(21) Numéro de dépôt: 91401466.7
(22) Date de dépôt: 05.06.1991
(51) Int. Cl.: H04N 7/167

(54) **Procédé et dispositif transcontrôleurs pour installation de diffusion de programmes de télévision à accès conditionnel**
Übertragungskontroll-Verfahren und Vorrichtung zur Einrichtung und Verteilung von Fernsehprogrammen mit bedingtem Zugang
Trans-controller method and device for installation and distribution of television programmes with conditional access

(30) Priorité: 08.06.1990 FR 9007165
(43) Date de publication de la demande: 11.12.1991
(73) Titulaire: FRANCE TELECOM, 75015 Paris (FR); TELEDIFFUSION DE FRANCE, 75932 Paris Cédex 15 (FR)
(72) Inventeur: Jouet, Jean Claude, F-78650 Beynes (FR); Vigarie, Jean Pierre, F-35510 Cesson Sevigne (FR)
(74) Mandataire: Fort, Jacques

(56) Documents cités:
- GB-A- 2 214 677
- ELEKTRONIK, vol. 38, no. 6, 17 mars 1989, pages 56-58, Munich, DE; M. JÜNKE:"Digitales Fernsehkonzept für Satelliten-Pay-TV"

## Description

L'invention concerne la diffusion de programmes de télévision à accès conditionnel, et plus particulièrement la diffusion de programmes sous forme d'un multiplex numérique-analogique suivant la norme MAC-PAQUETS (qu'on désignera pour simplifier par le terme MAC/P) utilisant le système d'accès Eurocrypt défini dans le document "Système d'accès conditionnel pour la famille MAC/PAQUET : Eurocrypt", publié par la République française, ministère des Postes, des Télécommunications et de l'Espace mars 1989 ou dans le document : "Elektronik, Vol. 38, no. 6, 17 mars 1989, pages 56-58, Munich, DE; article de M. Jünke, auxquels on pourra se reporter.

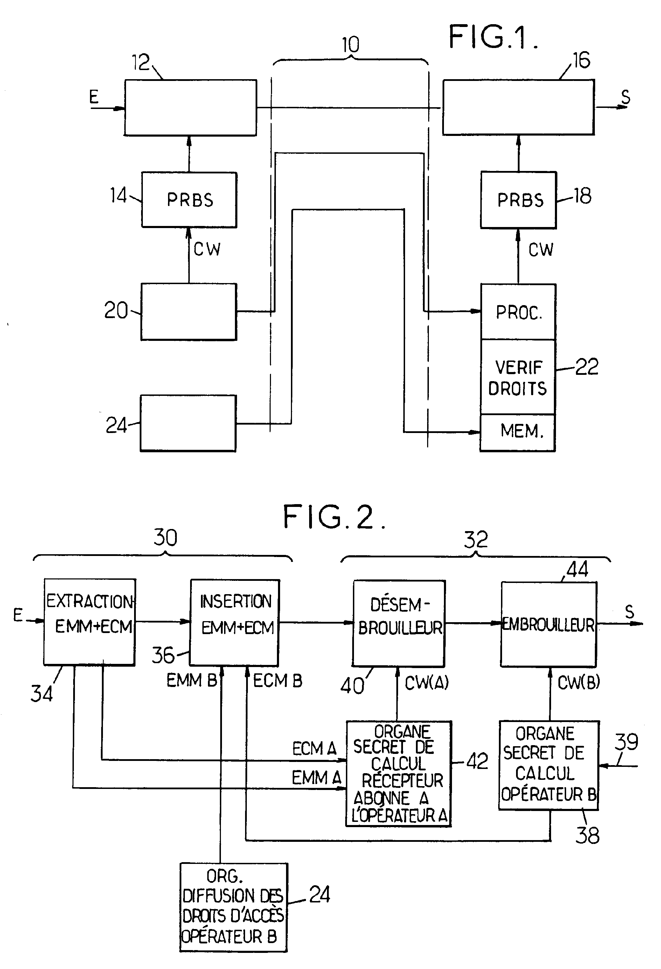

Le système d'accès conditionnel Eurocrypt est destiné à réserver l'accessibilité aux programmes de télévision, de radio ou de données aux usagers répondant à des conditions prédéterminées. Il met en oeuvre un système d'embrouillage-désembrouillage, qui agit sur les signaux de programmes, et un système de chiffrement-déchiffrement qui traite les clés et les signaux de données nécessaires aux utilisateurs autorisés pour leur permettre d'accéder aux programmes. Les composants essentiels du système Eurocrypt sont indiqués schématiquement sur la figure 1. La partie du système d'embrouillage-désembrouillage enterrée dans le codeur placé en amont d'un canal 10 de transmission ou de diffusion comprend un embrouilleur 12 et un générateur 14 de séquences pseudo-aléatoires de brouillage. L'embrouilleur 12 combine chaque composante du signal d'entrée E avec la sortie du générateur 14, par exemple par addition binaire modulo 2. Dans la partie du système équipant le décodeur, un désembrouilleur 16 restitue les composantes du signal désembrouillé S à partir du signal utile transmis et du signal de sortie d'un générateur de séquences pseudo-aléatoires 18 qui, pour cela, fournit la même séquence que le générateur 14.

Le système de chiffrement-déchiffrement fournit des mots de contrôle CW identiques aux générateurs 14 et 18. Le système comporte pour cela, dans le codeur et le décodeur, deux organes secrets de calcul 20 et 22, qu'on peut regarder comme ayant chacun un processeur de sécurité et une mémoire vive. Dans le processeur sont mémorisés des clés secrètes et les droits d'accès associés. Pour que le processeur de l'organe 22 puisse reconstituer le mot de contrôle CW, il doit recevoir :
- par le canal de transmission et de diffusion 10 un message de contrôle de titre d'accès ECM, contenant le mot de contrôle CW chiffré par une clé d'exploitation SK et indiquant les conditions d'accès au programme, modifié à fréquence relativement élevée (une fois toutes les 256 trames par exemple) pour éliminer la possibilité de décryptage,
- un message de gestion des titres et droits d'accès EMM propre à l'opérateur de diffusion ou de transmission, fourni par un organe gestionnaire 24 permettant de sélectionner les destinaires en droit de recevoir l'émission en distribuant les titres d'accès et en modifiant périodiquement la clé d'opérateur contenue dans le processeur.

Sur le schéma de la figure 1, les messages EMM de gestion des titres et droits d'accès dans l'organe secret de calcul du décodeur sont transmis par le canal 10 depuis un diffuseur 24. Mais, dans la mesure où les droits d'accès donnés au décodeur ne changent qu'à intervalles de temps élevés, il est possible de transmettre ces messages par d'autres voies, par exemple sur le réseau téléphonique ou même sous forme d'informations remises par la poste et à charger manuellement. Les messages ECM peuvent appartenir à une seule série ou à deux séries différentes, affectées à des composantes différentes du signal. Ils sont contenus dans le multiplex paquets et leur adresse est donnée par des paquets dans une voie d'identification de services.

Au cours d'une séquence de déchiffrage, l'organe secret de calcul 22 vérifie d'abord que les paramètres de conditions d'accès au programme transmis ou diffusé ont été chargés dans sa mémoire par le message EMM, répété à intervalles rapprochés s'il est transmis par le canal 10, puis déchiffre le mot de contrôle CW à partir du cryptogramme CW (SK) de ce mot transmis dans le signal MAC/P, à l'intérieur du message ECM, et ce à chaque apparition d'un nouveau cryptogramme. Pour cela il utilise la clé d'exploitation SK propre au codeur et l'algorithme secret de calcul mémorisé.

Dans certains cas, il n'y a pas transmission directe du programme de l'opérateur "primaire" A (diffuseur par satellite par exemple) vers un téléspectateur équipé d'un récepteur dont le décodeur autorise l'accès conditionnel. La diffusion vers les abonnés peut être effectuée par un opérateur de service B qui souhaite n'autoriser l'accès qu'à ses propres abonnés et à ses propres conditions et aura donc des clés d'exploitation SK propres (l'algorithme et les conditions d'accès au programme pouvant lui être propres ou être communs à plusieurs opérateurs). Un transbrouillage est alors nécessaire. Ce cas est par exemple celui d'un opérateur B diffusant, sur un réseau câblé, des émissions qu'il reçoit par satellite et qui doit transbrouiller le signal reçu.

Une solution qui vient immédiatement à l'esprit consiste à décoder entièrement le signal provenant de l'opérateur "primaire" et à le recoder en tête de réseau câblé. Cette solution présente le grave inconvénient d'exiger un système très complexe étant donné que le multiplex MAC/P peut avoir jusqu'à neuf composantes qui doivent être transbrouillées séparément, quelquefois à partir de messages ECM différents. Au surplus, le décodage et le recodage complet du signal le dégradent. Cette approche semble cependant a priori nécessaire étant donné que les mots de contrôle sont remplacés à intervalles très rapprochés, et doivent être disponibles quasi-instantanément pour le transbrouillage faute de quoi il y aurait une perte d'information vidéo et sonore inacceptable dans la pratique.

La présente invention vise notamment à fournir un procédé et un dispositif transcontrôleurs de signal MAC/P provenant d'un premier opérateur pour diffusion par un opérateur de service, répondant mieux que ceux antérieurement connus aux exigences de la pratique, notamment en ce qu'ils mettent en oeuvre des moyens simples et altèrent peu le contenu du signal. Le terme "transcontrôleur" signifie qu'il y a modification de paramètres de contrôle d'accès et des clés, notamment de la clé opérateur contenue dans les organes secrets de calcul.

Les messages ECM sont déchiffrés en temps réel ; ils donnent la clé SK qui permet de restituer en totalité les composantes du signal MAC/P (vidéo, son et données).

Pour arriver à ce résultat, l'invention propose un procédé transcontrôleur d'un signal MAC/P comprenant une composante analogique et un multiplex de paquets numériques l'un et l'autre embrouillés par une séquence déterminée par un mot de contrôle, le multiplex numérique contenant d'une part un signal utile de son et de données, d'autre part un message de contrôle de titre d'accès contenant le mot de contrôle chiffré par une clé d'exploitation SK et modifié à intervalles de temps rapproché et, éventuellement d'autre part encore, un message de gestion de titres d'accès et d'adressage EMM propre à un premier opérateur (A), de modification périodique de la clé d'exploitation, conforme à la partie caractérisante de la revendication 1.

L'invention propose également un dispositif transcontrôleur pour installation de diffusion de programmes de télévision à accès conditionnel, suivant une norme MAC/PAQUETS, permettant de mettre en oeuvre le procédé ci-dessus défini, conforme à la revendication 2.

L'invention sera mieux comprise à la lecture de la description qui suit d'un mode particulier de réalisation, donné à titre d'exemple non limitatif. La description se réfère aux dessins qui l'accompagnent, dans lesquels :
- la figure 1, déjà mentionnée, est un schéma de principe montrant la séquence de traitement conduisant à l'émission d'un signal embrouillé et à la restitution d'un signal en clair, avec utilisation de messages EMM et ECM ;
- la figure 2 est un schéma de principe d'un dispositif transcontrôleur mettant en oeuvre l'invention ;
- la figure 3 est un schéma synoptique montrant une constitution possible d'un système à dispositif transcontrôleur suivant la figure 2.

Le dispositif transbrouilleur dont le schéma de principe est montré en figure 2 peut notamment être placé en tête de réseau terrestre pour permettre à un opérateur B de diffuser vers ses abonnés un signal D2 MAC/P, désigné par E sur la figure 2, embrouillé par un autre opérateur A. Alors que l'algorithme d'embrouillage et de désembrouillage et les conditions d'accès, fixées par les messages EMM, peuvent être communs à plusieurs opérateurs, la clé ou les clés d'exploitation SK sont, elles, spécifiques à chaque opérateur. Le signal de sortie S doit contenir les composantes du signal D2 MAC/P (vidéo, audio, données et éventuellement télétexte) dont certaines au moins sont embrouillées avec une clé d'exploitation de l'opérateur B. Le signal doit également contenir l'information (au moins les messages ECM et souvent ECM et EMM) nécessaires pour que les dispositifs d'accès conditionnel enterrés dans les décodeurs des abonnés autorisés ou reliés aux décodeurs puissent restituer le signal en clair.

Le transbrouilleur assure deux fonctions :
- il remplace les messages ECM (A) (et éventuellement EMM (A), lorsque ces derniers sont émis sur la même voie par des messages ECM (B) et EMM (B)), ce qui se traduit par une substitution de paquets,
- il effectue le transbrouillage de celles des composantes du signal utile qui doivent parvenir brouillées à l'abonné.

Ces deux fonctions sont remplies la première par une unité de remplacement 30, la seconde par une unité de transbrouillage 32.

L'unité de remplacement 30 comporte des moyens 34 d'extraction des paquets contenant les messages ECM (A) et éventuellement EMM (A) propres à l'opérateur A et des moyens 36 qui insèrent les nouveaux paquets contenant les messages ECM (B) et éventuellement EMM (B) propres à l'opérateur B.

Les paquets contenant les nouveaux messages ECM (B) sont générés par un organe secret de calcul 38 propre à l'opérateur B. S'ils sont prévus, les paquets représentant les messages EMM (B) propres à l'opérateur B sont générés par un organe 24 de diffusion des droits d'accès propres à l'opérateur B, et éventuellement à d'autres opérateurs.

L'unité de transbrouillage 32 comporte un désembrouilleur 40 destiné à fournir le signal utile à partir des mots de contrôle CW propres à l'opérateur A, déchiffrés par l'organe secret de calcul 42, qui est identique à l'organe secret de calcul destiné aux abonnés directs de l'opérateur A. Elle comporte, en aval du désembrouilleur 40, un embrouilleur 44 qui embrouille toutes les composantes, ou uniquement celles à accès conditionnel, à partir des mots de contrôle CW (B) propres à l'opérateur B, fournis par l'organe secret de calcul 38, dans lequel sont chargées les conditions 39 d'accès au programme propres a l'opérateur b.

Le transbrouillage est donc effectué sans qu'il soit nécessaire de revenir au signal d'origine en bande de base et pour toutes les composantes à la fois, ce qui réduit la dégradation subie par le signal et simplifie considérablement les circuits.

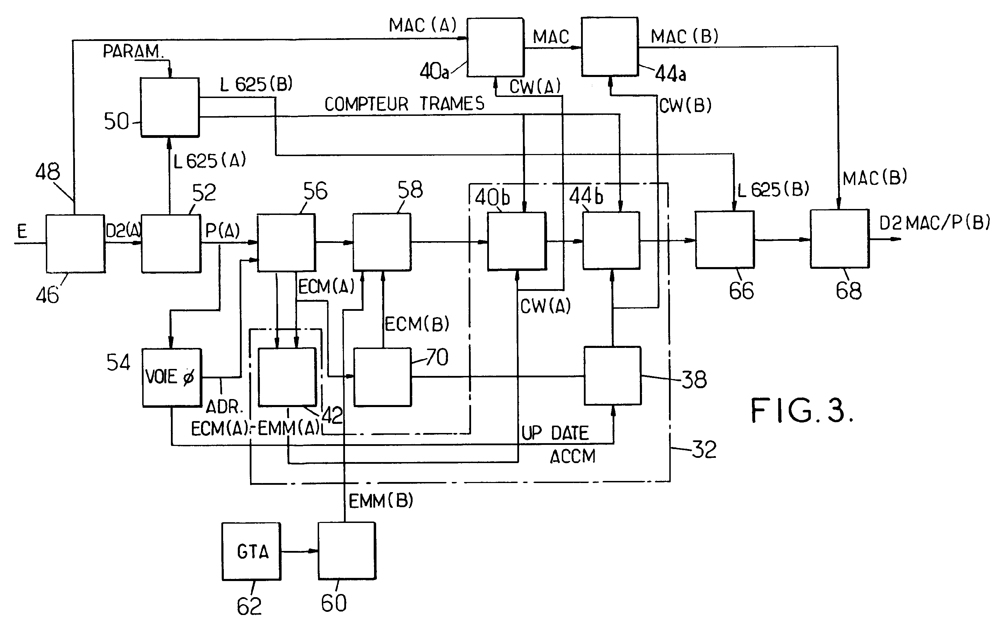

La figure 3 montre la constitution détaillée d'un dispositif transcontrôleur conforme au schéma de principe de la figure 2 ainsi que les composants d'entrée et de sortie qui interviennent avant extraction des messages et après réembrouillage. Sur ce synoptique, qui correspond au traitement d'un signal conforme à la norme D2 MAC/P, les composants du dispositif identiques à ceux qu'on trouve dans un réseau de diffusion D2 MAC/P ne seront pas décrits.

Les composants d'entrée comprennent un démultiplexeur temporel d'entrée 46 qui reçoit le signal E embrouillé par l'opérateur A et répartit les composantes. La composante vidéo MAC (A) est émise sur une sortie 48 vers une chaîne d'embrouillage et de désembrouillage comprenant un désembrouilleur 40a et un embrouilleur 44a. Le multiplex D2 (A) de données et de sons est émis sur une sortie vers une chaîne comprenant un désembrouilleur 40b et un réembrouilleur 44b qui seront mentionnés de nouveau plus loin.

Un circuit 52 de constitution classique de décodage duobinaire, de débrassage et de désentrelacement qui extrait la ligne 625 du signal et la fournit à un circuit de traitement 50 qui contient un compteur de trames et qui substitue, au contenu de la ligne 625 d'origine, une nouvelle ligne 625 non chiffrée, où les paramètres d'empreinte digitale et de remplacement sont ceux de l'opérateur B. A la sortie du circuit 52, les paquets d'ordre zéro dans le multiplex de chaque trame, qui constituent la voie d'identification des services (souvent dénommée voie 0) sont séparés des autres paquets à la sortie du décodeur par un circuit 54 d'extraction et de traitement de la voie 0. Le compteur de trames extrait de la ligne 625 permet de synchroniser le désembrouillage et l'embrouillage.

Le circuit 54 fournit l'adresse des paquets représentant les messages ECM (A) et éventuellement EMM (A) au démultiplexeur de paquets 56, lui permettant ainsi de fournir ECM (A) et EMM (A) à l'organe secret de calcul 42, identique à celui d'un récepteur pour abonné de l'opérateur A. L'organe 42 traite les messages ECM (A) et éventuellement EMM (A) embrouillés par l'opérateur A et restitue le mot de contrôle CW (A) nécessaire au désembrouillage de la composante vidéo par le désembrouilleur 40a et du multiplex paquets (son et données) par le désembrouilleur 40b.

Le multiplex numérique est reconstitué par un multiplexeur 58 qui reçoit d'une part la sortie du démultiplexeur de paquets 56, d'autre part les messages ECM (B) propres à l'opérateur B fournis par l'organe secret de calcul 38, et d'autre part encore (si les messages EMM sont diffusés par l'opérateur B et non pas transmis par d'autres moyens) les messages EMM (B) provenant d'un injecteur de messagerie 60 alimenté par le gestionnaire de titres d'accès (GTA) 62.

A la sortie du multiplexeur de paquets 58, le multiplex numérique contient les paquets représentatifs du son et des données encore embrouillés suivant A et, en clair, les messages ECM et éventuellement EMM propres à l'opérateur B. Le désembrouilleur 40b est prévu pour ne pas traiter les messages ECM et EMM.

A la sortie du désembrouilleur 40b, le multiplex numérique est constitué entièrement de paquets en clair. A la sortie de l'embrouilleur 44b qui le suit, la totalité des paquets est embrouillée à partir des mots de contrôle CW (B) propres à l'opérateur B.

Un circuit 66 d'entrelacement, de brassage et de codage duobinaire, qui constitue le dual du circuit 52, réintroduit la ligne 625 embrouillée provenant du circuit de traitement 50 et fournit en sortie l'ensemble des paquets à transmettre.

Enfin, le multiplexeur temporel de sortie 68 constitue le signal embrouillé D2 MAC/P à transmettre, à partir de la sortie du circuit 66 et de l'embrouilleur vidéo 44a. Le signal de sortie S n'est accessible qu'aux conditions fixées par l'opérateur B, avec des composantes (vidéo, son, données et indications de service) identiques à celles du signal entrant S, exception faite de celles propres à l'opérateur B.

S'il se limitait aux composantes qui viennent d'être décrites, le dispositif transcontrôleur ne pourrait fonctionner correctement car les paquets contenant les messages ECM ne seraient connus qu'au moment même où ils doivent être utilisés pour fournir le mot de contrôle : en conséquence, ce mot de contrôle ne serait pas disponible pour les premières trames suivant son apparition, d'où une dégradaticn de l'image. Ce problème est écarté en utilisant le fait que la voie 0 contient des messages relatifs au contrôle des titres d'accès ACCM qui fournissent l'adresse des messages de contrôle des titres d'accès ECM. Les messages ACCM indiquent notamment l'adresse de paquets des ECM (A) à venir, sous forme d'un paramètre de mise à jour UPDATE ACCM. Le circuit 54 d'extraction et de traitement de la voie zéro est prévu pour fournir non seulement l'adresse des paquets représentant les messages ECM (A) et éventuellement EMM (A) au démultiplexeur de paquets 56, mais aussi le paramètre UPDATE ACCM permettant à l'organe secret de calcul 38 de l'opérateur B de générer les paquets ECM (B) à partir des conditions d'accès propres à l'opérateur B et des adresses des voies ECM (A) à venir extraites des UPDATE ACCM par le circuit d'extraction 54. Les paquets ECM (B) sont appliqués au multiplexeur de paquets 58 à travers le circuit de validation 70, qui les transmet au multiplexeur de paquets 58 à réception d'un ordre de validation constitué par l'apparition effective d'un ECM (A) à la sortie dudit démultiplexeur de paquets 56.

Grâce à l'anticipation autorisée par les signaux UPDATE ACCM et à cette disposition, chacun des messages ECM (A) propres à l'opérateur A peut être remplacé par le message ECM (B) propre à l'opérateur B en temps réel.

L'anticipation par les UPDATE ACCM permet la préparation des ECM (B) et la prise en compte du temps de calcul de l'organe secret 32.

Le dispositif transcontrôleur qui vient d'être décrit impose à la composante MAC un retard différent de celui qu'il impose aux paquets. En effet, le retard de la composante MAC est due au désembrouillage et à l'embrouillage, tandis que celui qui est apporté aux paquets résulte de plus du désentrelacement et de l'entrelacement. Dans la pratique, le retard de la composante MAC sera généralement de deux lignes, tandis que celui du multiplex sera de quinze lignes, soit deux paquets. Dans la pratique, le décalage temporel qui en résulte n'est pas gênant et ne dégrade pas le signal. Si on le souhaite cependant, il est possible d'utiliser des circuits à retard pour remettre les composantes strictement en synchronisme.

On voit que le dispositif qui vient d'être décrit permet de transférer le contrôle d'accès d'un opérateur A à un opérateur B sans qu'il soit nécessaire de revenir jusqu'au signal d'origine. On peut sans difficulté constituer un dispositif traitant un maximum de neuf composantes simultanées, soit une composante MAC et huit composantes dans le multiplex paquets utilisant des mots de contrôle différents et soumises à des conditions d'accès différentes, en ne mettant en oeuvre que des circuits dont la rapidité est celle couramment disponible à l'heure actuelle, avec un seul organe secret de calcul pour récepteur d'abonnés A propre à l'opérateur A et un seul organe secret de calcul d'émission propre à l'opérateur B même si les composantes utilisent des ECM différents.

## Revendications

1. Procédé transcontrôleur d'un signal MAC/PAQUETS comprenant une composante analogique et un multiplex de paquets numériques l'un et l'autre embrouillés par une séquence déterminée par un mot de contrôle, le multiplex numérique contenant d'une part un signal utile de son et de données, d'autre part des messages de contrôle de titre d'accès (ECM-A) contenant le mot de contrôle (CW) chiffré par une clé d'exploitation (SK) et modifié à intervalles de temps rapprochés et, éventuellement, d'autre part encore, des messages de gestion de titres d'accès et d'adressage (EMM-A) propres à un premier opérateur (A), de modification périodique de la clé d'exploitation,
caractérisé en ce qu'on décode le multiplex paquets du signal MAC/PAQUETS, on extrait la voie d'identification de services contenant avec anticipation les adresses des messages de contrôle de titre d'accès (ECM-A) et éventuellement des messages de gestion de titre d'accès et d'adressage (EMM-A) du multiplex et on l'analyse pour déterminer l'adresse des paquets contenant les messages de contrôle de titre d'accès (ECM-A), et éventuellement des messages de gestion de titre d'accès et d'adressage (EMM-A) à venir, présentant le chiffrage propre au premier opérateur (A), on substitue des messages de contrôle de titre d'accès (ECM-B) et éventuellement des messages de gestion de titre d'accès et d'adressage (EMM-B) présentant le chiffrage particulier à un second opérateur (B) aux messages de contrôle de titre d'accès (ECM-A) et éventuellement aux messages de gestion de titre d'accès et d'adressage (EMM-A), on désembrouille le signal utile à l'aide de la clé d'exploitation (SK-A) obtenue à partir des messages de contrôle de titre d'accès (ECM-A) et des messages de gestion de titre d'accès et d'adressage (EMM-A) et on les réembrouille à l'aide de la clé d'exploitation (SK-B) propre au second opérateur avant de reconstituer le signal MAC/PAQUETS.

2. Dispositif transcontrôleur pour installation de diffusion de programmes de télévision à accès conditionnel, suivant une des normes MAC/PAQUETS, comprenant une composante analogique et un multiplex de paquets numériques l'un et l'autre embrouillés par une séquence déterminée par un mot de contrôle, le multiplex numérique contenant des premiers messages de contrôle de titre d'accès (ECM-A) contenant le mot de contrôle (CW) chiffré par une clé d'exploitation (SK) et modifié à intervalles de temps rapprochés, caractérisé en ce qu'il comprend des moyens (34,56) d'extraction des premiers messages (ECM-A) du multiplex numérique, un organe secret de calcul (42) permettant de déterminer le mot de contrôle (CW(A)) nécessaire au désembrouillage du signal d'entrée en temps réel en utilisant les indications de mise à jour d'adresse (UP DATE ACCM) des messages de contrôle de titres d'accès (ECM-A) en anticipation sur l'apparition desdits messages, un organe secret de calcul (38) de seconds messages de contrôle de titres d'accès (ECM-B) propres à un second opérateur, en anticipation, en utilisant lesdites indications, des moyens (58) d'insertion des seconds messages de contrôle de titres d'accès (ECM-B) propres au second opérateur à la suite de l'extraction des premiers messages (ECM-A), des moyens de désembrouillage (40,40a,40b) utilisant le mot de contrôle (CW(A)) propre au premier opérateur fourni par l'organe secret de calcul correspondant (42), et des moyens d'embrouillage (44,44a,44b) utilisant le mot de contrôle (CW(B)) propre au second opérateur, fourni par l'organe secret de calcul (38) de seconds messages propre à ce second opérateur.

3. Dispositif selon la revendication 2, caractérisé en ce que le multiplex numérique comprend également des premiers messages de gestion de titres d'accès et d'adressage (EMM-A) propre à un premier opérateur (A), de modification périodique de clé, en ce que les dits moyens d'extraction sont également prévus pour extraire les dits premiers messages (EMM-A) et en ce que les dits moyens d'insertion (58) sont prévus pour insérer des seconds messages de gestion de titres d'accès (EMM-B) en place des premiers.

4. Dispositif selon la revendication 2 ou 3, caractérisé en ce qu'il comprend également un démultiplexeur d'entrée (46) dirigeant :
le multiplex numérique du signal vers un décodeur (52) dont la sortie alimente d'une part les dits moyens (56) d'extraction des premiers messages et d'autre part un circuit (54) d'extraction et de traitement de la voie (0) qui fournit les adresses des paquets contenant les premiers messages (ECM-A) aux dits moyens (56) d'extraction des messages ; et
la composante analogique vers ceux des moyens de désembrouillage (40a) et d'embrouillage (44a) qui seront propres à la composante analogique.

5. Dispositif selon la revendication 2, 3 ou 4, caractérisé en ce que :
les moyens de désembrouillage (40b) qui sont propres au multiplex de paquets numériques sont prévus pour recevoir, à partir des moyens (56) d'extraction des premiers messages et des moyens (58) d'insertion des seconds messages, le multiplex de paquets dans lequel les premiers messages (ECM-A) et éventuellement (EMM-A) sont remplacés par les seconds messages (ECM-B) et éventuellement (EMM-B) non embrouillés ; et
les moyens de désembrouillage (40b) propres au multiplex de paquets numériques sont prévus pour n'intervenir que sur la fraction non embrouillée dudit multiplex numérique.

6. Dispositif selon la revendication 4, caractérisé en ce que l'organe secret de calcul (38) propre au second opérateur est prévu que pour ne fournir, aux moyens d'embrouillage (40a,40b), le mot de contrôle propre au second opérateur uniquement à l'apparition des premiers messages de contrôle de titres d'accès correspondants à la sortie des moyens (56) d'extraction des messages.

7. Dispositif selon l'une quelconque des revendications 2 à 6, caractérisé en ce que l'organe secret de calcul (38) propre au second opérateur est prévu pour ne fournir aux moyens d'embrouillage (44b) un nouveau mot de contrôle qu'à l'apparition du premier message de contrôle de titres d'accès correspondants (ECM-A) à la sortie de moyens (56) d'extraction des messages.

## Patentansprüche

1. Verfahren zur Übergangssteuerung eines MAC/PAKETE(MAC/-PAQUETS)-Signals, welches eine analoge Komponente und ein Multiplex digitaler Pakete umfaßt, welche beide durch eine durch ein Steuerungswort bestimmte Sequenz verwürfelt sind, wobei das digitale Multiplex einesteils ein Ton- und Daten-Nutzsignal umfaßt, andernteils Zugriffstitelsteuerungsnachrichten (ECM-A), welche das durch einen Verarbeitungsschlüssel (SK) verschlüsselte und in nah beieinanderliegenden Zeitintervallen modifizierte Steuerungswort (CW) enthalten, und ggf., noch zu andernteils, einem ersten Betreiber (A) zugeordnete Zugriffs- und Adressierungstitelverwaltungsnachrichten (EMM-A) mit regelmäßiger Modifikation des Verarbeitungsschlüssels,
dadurch gekennzeichnet, daß man den Pakete-Multiplex des MAC/PAKETE-Signals dekodiert, man dem Multiplex den in Vorwegnahme die Adressen der Zugriffstitelsteuerungsnachrichten (ECM-A) und ggf. der Zugriffsund Adressierungstitelverwaltungsnachrichten (EMM-A) enthaltenden Dienste-Identifikationsweg entnimmt und man ihn analysiert, um die Adresse der kommenden, die Zugriffstitelsteuerungsnachrichten (ECM-A) und ggf. die Zugriffs- und Adressierungstitelverwaltungsnachrichten (EMM-A) enthaltenden Pakete zu bestimmen, welche die dem ersten Betreiber (A) zugeordnete Verschlüsselung darstellen, man Zugriffstitelsteuerungspakete (ECM-B) und ggf. Zugriffs- und Adressierungstitelverwaltungsnachrichten (EMM-B), welche die für einen zweiten Betreiber (B) charakteristische Verschlüsselung darstellen, an die Stelle der Zugriffstitelsteuerungsnachrichten (ECM-A) und ggf. der Zugriffs- und Adressierungstitelverwaltungsnachrichten (EMM-A) setzt, man das Nutzsignal mittels des aus den Zugriffstitelsteuerungsnachrichten (ECM-A) und den Zugriffs- und Adressierungstitelverwaltungsnachrichten (EMM-A) erhaltenen Verarbeitungsschlüssels (SK-A) entwürfelt und man es mittels des dem zweiten Betreiber zugeordneten Verarbeitungsschlüssels (SK-B) wiederverwürfelt, bevor das MAC/PAKETE-Signal rekonstruiert wird.

2. Übergangssteuerungsvorrichtung zum Einrichten des Sendens von Fernsehprogrammen mit bedingtem Zugriff gemäß einer der MAC/PAKETE(MAC/PAQUETS)-Normen, welche eine analoge Komponente und ein Multiplex digitaler Pakete umfassen, welche beide durch eine durch ein Steuerungswort bestimmte Sequenz verwürfelt sind, wobei das digitale Multiplex erste Zugriffstitelsteuerungsnachrichten (ECM-A) umfaßt, welche das durch einen Verarbeitungsschlüssel (SK) verschlüsselte und in nah beieinanderliegenden Zeitintervallen modifizierte Steuerungswort (CW) enthalten,
dadurch gekennzeichnet, daß sie Mittel (34,56) zum Entnehmen der ersten Nachrichten (ECM-A) aus dem digitalen Multiplex, eine Geheimrecheneinheit (42), durch die das Steuerungswort (CW(A)) bestimmbar ist, welches zum Entwürfeln des Eingangssignals in Echtzeit unter Verwendung der Angaben der Adreß-Aktualisierung (UP DATE ACCM) der Zugriffstitelsteuerungsnachrichten (ECM-A) in Vorwegnahme auf das Auftreten der Nachrichten notwendig ist, eine Geheimrecheneinheit (38) für zweite, einem zweiten Betreiber zugeordnete Zugriffstitelsteuerungsnachrichten (ECM-B) in Vorwegnahme unter Verwendung der Angaben, Mittel (58) zum Einfügen der zweiten, dem zweiten Betreiber zugeordneten Zugriffstitelsteuerungsnachrichten (ECM-B) nach dem Entnehmen der ersten Nachrichten (ECM-A), das von der entsprechenden Geheimrecheneinheit (42) gelieferte, dem ersten Betreiber zugeordnete Steuerungswort (CW(A)) verwendende Entwürfelungsmittel (40,40a,40b) und Verwürfelungsmittel (44,44a,44b) umfaßt, welche das von der Geheimrecheneinheit (38) der dem zweiten Betreiber zugeordneten zweiten Nachrichten gelieferte, dem zweiten Betreiber zugeordnete Steuerungswort (CW(B)) verwenden.

3. Vorrichtung nach Anspruch 2, dadurch gekennzeichnet, daß das digitale Multiplex auch erste, einem ersten Betreiber (A) zugeordnete Zugriffs- und Adressierungstitelverwaltungsnachrichten (EMM-A) mit regelmäßiger Modifikation des Schlüssels umfaßt, daß die Mittel zum Entnehmen ferner dazu vorgesehen sind, die ersten Nachrichten (EMM-A) zu entnehmen, und daß die Mittel (58) zum Einfügen dazu vorgesehen sind, zweite Zugriffstitelverwaltungsnachrichten (EMM-B) anstelle der ersten einzufügen.

4. Vorrichtung nach Anspruch 2 oder 3, dadurch gekennzeichnet, daß sie auch einen Eingangsdemultiplexer (46) umfaßt, welcher steuert:
das digitale Multiplex des Signals zu einem Dekoder (52), dessen Ausgang einesteils in die Mittel (56) zum Entnehmen der ersten Nachrichten mündet und andernteils in eine Schaltung (54) zum Entnehmen und zum Verarbeiten des Wegs (0), welcher die Adressen der die ersten Nachrichten (ECM-A) enthaltenden Pakete zu den Mitteln (56) zum Entnehmen der Nachrichten liefert; und
die analoge Komponente zu denjenigen der Entwürfelungs- (40a) und Verwürfelungsmittel (44a), welche der analogen Komponente zugeordnet sind.

5. Vorrichtung nach Anspruch 2, 3 oder 4, dadurch gekennzeichnet, daß:
die dem Multiplex der digitalen Pakete zugeordneten Entwürfelungsmittel (40b) dazu vorgesehen sind, von den Mitteln (56) zum Entnehmen der ersten Nachrichten und den Mitteln (58) zum Einfügen der zweiten Nachrichten das Multiplex der Pakete zu empfangen, in welchem die ersten Nachrichten (ECM-A) und ggf. (EMM-A) durch die zweiten, nicht verwürfelten Nachrichten (ECM-B) und ggf. (EMM-B) ersetzt sind; und
die dem Multiplex der digitalen Pakete zugeordneten Entwürfelungsmittel (40b) dazu vorgesehen sind, nur in den nicht verwürfelten Teil des digitalen Multiplex einzugreifen.

6. Vorrichtung nach Anspruch 4, dadurch gekennzeichnet, daß die dem zweiten Betreiber zugeordnete Geheimrecheneinheit (38) dazu vorgesehen ist, den Verwürfelungsmitteln (40a,40b) das dem zweiten Betreiber zugeordnete Steuerungswort nur beim Auftreten der entsprechenden ersten Zugriffstitelsteuerungsnachrichten am Ausgang der Mittel (56) zum Entnehmen der Nachrichten zu liefern.

7. Vorrichtung nach einem der Ansprüche 2 bis 6, dadurch gekennzeichnet, daß die dem zweiten Betreiber zugeordnete Geheimrecheneinheit (38) dazu vorgesehen ist, den Verwürfelungsmitteln (44b) einen neuen Steuerungsmodus nur beim Auftreten der entsprechenden ersten Zugriffstitelsteuerungsnachrichten (ECM-A) am Ausgang der Mittel (56) zum Entnehmen der Nachrichten zu liefern.

## Claims

1. A method of transcontrolling a MAC/PACKET signal which comprises an analogue component and a multiplex of digital packets both scrambled by a predetermined sequence derived from a control word, the digital multiplex containing, on the one hand, a useful signal of sound and data, on the other hand entitlement checking messages (ECM-A) containing the control word (CW) encyphered by a service key (SK) and modified at mutually close time intervals and, possibly, still on the other hand, entitlement management and addressing messages (EMM-A) which are specific to a first operator (A), for periodically modifying the service key,
characterized by the steps of decoding the packet multiplex of the MAC/PACKET signal, extracting the service identification channel which contains the addresses of the entitlement checking passages (ECM-A) and possibly of the entitlement management and addressing messages (EMM-A) in time advance, and analysing service identification of the channel for determining the address of the packets which contain the entitlement checking messages (ECM-A) and possibly the entitlement management and addressing messages (EMM-A) to come, which are encyphered in a way which is specific to the first operator (A), substituting entitlement checking messages (ECM-B) and possibly entitlement management and addressing messages (EMM-B) which are encyphered in a way which is specific to a second operator (B) to the entitlement checking messages (ECM-A) and possibly the entitlement management and addressing messages (EMM-A), descrambling the useful signal with the service key (SK-A) obtained from the entitlement checking messages (ECM-A) and the entitlement management and addressing messages (EMM-A), and rescrambling it with the service key (SK-B) specific to the second operator before reconstructing the MAC/PACKET signal.

2. Transcontroller device for a conditional access television program broadcasting installation according to one of the MAC/PACKET standards, comprising an analogue component and a digital packet multiplex both encyphered by a predetermined sequence derived from a control word, the digital multiplex containing first entitlement control messages (ECM-A) containing the control word (CW) scrambled by a service key (SK) and modified at mutually close time intervals,
characterized in that it comprises means (34,56) for extracting the first messages (ECM-A) from the digital multiplex, a secret computing unit (42) for determining the control word (CW-A) necessary for descrambling the input signal in real time by using the address updating indications (up date ACCM) of the entitlement checking messages (ECM-A) in advance with respect to the receipt of said messages, a secret computing unit (38) for computing second entitlement checking messages (ECM-B) specific to a second operator, in advance, by using said indications, means (58) for inserting the second entitlement checking messages (ECM-B) specific to a second operator after extraction of the first messages (ECM-A), descrambling means (40,40a,40b) which use the control word (CW(A)) specific to the first operator delivered by the respective secret computing unit (42), and scrambling means (44,44a 44b) which use the control word (CW(B)) specific to the second operator, delivered by the secret computing unit (38) for computing second messages, specific to the second operator.

3. Device according to claim 2,
characterized in that the digital multiplex further comprises first entitlement management and addressing messages (EMM-A) specific to a first operator (A), for periodically modifying the key, in that said extraction means are also provided for extracting said first messages (EMM-A) and in that said insertion means (58) are arranged for inserting second entitlement management messages (EMM-B) in substitution for the first messages.

4. Device according to claim 2 or 3,
characterized in that it further comprises an input demultiplexer (46) which directs :
the digital multiplex of the signal to a decoder (52) whose output drives, on the one hand, said means (56) for extracting the first messages and, on the other hand, a circuit (54) for extracting and processing channel (0) which delivers the addresses of the packets which contain the first messages (ECM-A) to said means (56) for extracting the messages; and
the analogue components toward those of said descrambling (40a) and scrambling (44a) which are specific to the analogue component.

5. Device according to claim 2, 3, or 4,
characterized in that :
the descrambling means (40b) which are specific to the digital packet multiplex are arranged for receiving, from the means (56) for extracting the first messages and from means (58) for inserting the second messages, the packet multiplex wherein the first messages (ECM-A) and possibly (EMM-A) are replaced by the second messages (ECM-B) and possibly (EMM-B) in unscrambled form; and
the descrambling means (40b) which are specific to the digital packet multiplex are arranged for operating only that portion of said digital multiplex which is unscrambled.

6. Device according to claim 4,
characterized in that the secret computing unit (38) which is specific to the second operator is arranged for delivering, to the scrambling means (40a,40b), the entitlement checking message specific to the second operator only upon appearance of the corresponding first access checking messages on the output of the means (56) for extracting the messages.

7. Device according to any one of claims 2-6,
characterized in that the secret computing unit (38) which is specific to the second operator is arranged for delivering to the scrambling means (44b) a new control word only upon appearance of a corresponding entitlement checking message (ECM-A) on the output of means (56) for extracting the messages.
